# EUROPÄISCHE PATENTSCHRIFT

(11) **EP 1 438 218 B1**
(45) Veröffentlichungstag und Bekanntmachung des Hinweises auf die Patenterteilung: **15.06.2005**
(21) Anmeldenummer: 02762465.9
(22) Anmeldetag: 27.08.2002
(51) Int. Cl.: B60R 21/20, B60R 21/045

(54) **AIRBAGANORDNUNG IN EINEM FAHRZEUG, INSBESONDERE EINEM KRAFTFAHRZEUG**
AIRBAG ARRANGEMENT IN A VEHICLE, IN PARTICULAR A MOTOR VEHICLE
SYSTEME D'AIRBAG SITUE DANS UN VEHICULE, NOTAMMENT UNE AUTOMOBILE

(30) Priorität: 17.10.2001 DE 10150660; 21.12.2001 DE 10163686
(43) Veröffentlichungstag der Anmeldung: 21.07.2004
(73) Patentinhaber: Volkswagen Aktiengesellschaft, 38436 Wolfsburg (DE)
(72) Erfinder: DIETZE, Holger, 38162 Cremlingen (DE); KESSLER, Jörn, 27607 Langen (DE); DAHMEN, Peter, 38126 Braunschweig (DE)
(74) Vertreter: Liebl, Thomas, Dipl.-Ing.
(86) Internationale Anmeldenummer: PCT/EP2002/009540
(87) Internationale Veröffentlichungsnummer: WO 2003/033314

(56) Entgegenhaltungen:
- EP-A- 0 997 352
- DE-A- 19 860 804
- US-A- 3 817 552
- US-A- 5 087 067
- US-A- 5 209 519
- US-A- 5 547 215
- US-B1- 6 193 271
- JOHN HINCH ET AL.: "Air Bag Technology in Light Passenger Vehicles" [Online] 27. Juni 2001 (2001-06-27) , NATIONAL HIGHWAY TRAFFIC SAFETY ADMINISTRATION XP002218836 Gefunden im Internet: <URL: www-nrd.nhtsa.dot.gov/pdf/nrd-11/airbags/r ev_report.pdf> [gefunden am 2002-10-29] das ganze Dokument

## Beschreibung

Die Erfindung betrifft eine Airbaganordnung in einem Fahrzeug, insbesondere einem Kraftfahrzeug, nach dem Oberbegriff des Anspruchs 1.

Eine Airbaganordnung in einem Kraftfahrzeug ist z. B. aus der DE 197 04 684 C2 bekannt Die Airbaganordnung ist hier als Beifahrerairbaganordnung ausgebildet, bei der der Airbag mitsamt zugeordnetem Gasgenerator, d. h. das gesamte Airbagmodul, in einem der Windschutzscheibe abgewandten hinteren Instrumententafelbereich, der der Beifahrersitzpoition unmittelbar zugeordnet ist, angeordnet ist. Dadurch soll im Falle der Aktivierung der Beifahrerairbaganordnung der Airbag schnell vor dem sich in einer normalen Sitzposition befindlichen Beifahrer aufgeblasen werden. Aufgrund dieser Anordnung des Airbags im hinteren Instrumententafelbereich wird der Airbag hier somit sofort nach seiner Aktivierung unmittelbar im Aufblasbereich mit hohem Fülldruck von z. B. ca. 30 bar vor dem Beifahrer aufgeblasen. Problematisch ist ein derartiger Aufbau in Verbindung mit sich nicht in einer normalen Sitzposition (out-of-position) befindlichen Fahrzeuginsassen, z. B. Kindern, die im Beifahrerbereich unmittelbar hinter der Instrumententafel stehen, oder aber auch Kindern und Erwachsenen, die sich z. B. in einer mit dem Kopf in Richtung Instrumententafel nach vorne gebeugten oder geneigten Haltung befinden und/oder ggf. nicht vorschriftsmäßig angegurtet sind. In einem solchen Fall besteht die Gefahr, dass die Fahrzeuginsassen im Falle eines Unfalls mit dem Kopf auf diesen hinteren, dem Beifahrer zugewandten Instrumententafelbereich noch vor der Aktivierung des Airbags als Primäraufprallschutz aufprallen oder sich zumindest in Richtung auf diesen potentiellen Kopfaufprallbereich zu bewegen, was bei einer gleichzeitig stattfindenden Airbagaktivierung zu einer Beeinträchtigungsgefahr für die Fahrzeuginsassen führt, da der Airbag hier aufgrund des sehr hohen anfänglichen Fülldrucks mit maximaler Airbagaggressivität in Richtung auf den Fahrzeuginsassen bzw. dessen Kopfbereich zu aufgeblasen wird.

Ein ähnlicher Aufbau mit den eben erwähnten Nachteilen ist weiter auch aus der DE 199 15 974 A1 bekannt.

Weiter sind Airbaganordnungen an einem Modulträger eines Kraftfahrzeuges bekannt, so z. B. aus der EP 1038 737 A2, bei der ein Airbagmodul an einem Modulträger als Querträger festgelegt ist. Dieser Modulträger verläuft als Fahrzeug-Querträger zwischen den gegenüberliegenden A-Säulen in einem Bereich in etwa auf Höhe eines Heiz- und Klimagerätes, in einem Bereich vor dem Heiz- und Klimagerät bezogen auf die Instrumententafel in Fahrzeuglängsachsenrichtung gesehen. Am Querträger ist hier ein Aufnahmeabschnitt ausgebildet, in den das Airbagmodul eingesetzt und dort fixiert werden kann. Die Halterungen für das Airbagmodul sind hier so ausgebildet, dass das Airbagmodul nach dem Einsetzen in die Halterungen verdreht werden muss, um das Airbagmodul in die richtige Gebrauchsposition zu überführen. Durch diesen Drehverschluss ist die Demontage bzw. der Ersatz möglich, ohne den Modulträger insgesamt demontieren zu müssen. Nachteilig bei diesem Aufbau ist jedoch, dass hier konstruktive Veränderungen am Querträger selbst vorgenommen werden müssen, was regelmäßig unerwünscht ist, da der Modulträger als Querträger ein für die Fahrzeugsteifigkeit wesentliches tragendes Bauteil ist. Daher ist ein derartiger Aufbau insgesamt wenig praktikabel.

Aus der gattungsbildenden US 5,087,067, der US 3,817,552, der EP 0 997 352 A1 und der US 5,209,519 ist jeweils ein Aufbau bekannt, bei dem eine Airbagaustrittöffnung im vorderen Instrumententafelwandbereich windschutzscheibennah ausgebildet ist. Bei der EP 0 997 352 A1 soll durch eine spezielle Airbagfaltung bzw. ―entfaltung vermieden werden, dass der Airbag mit der Windschutzscheibe in Kontakt gelangt. Bei der US 3,817,552 soll eine einfache Vormontage des Systems ermöglicht werden. Bei der US 5,087,067 soll das Aufblasverhalten des Airbags verbessert werden, indem durch eine spezielle Einblastechnik das Flattern des Airbags beim Aufblasen vermieden werden soll. Beispielsweise wird hierzu ein Gasstrom in Richtung zur Windschutzscheibe nach oben gerichtet. Der US 5,209,519 liegt dagegen die Aufgabe zugrunde, ein Airbaggehäuse zur Verfügung zu stellen, das Aufprallenergie absorbieren kann und außerdem genügend mechanische Festigkeit aufweist, d. h. das das Airbaggehäuse Bereiche unterschiedlicher Festigkeit aufweisen soll. Dazu ist ein zweiteiliges Airbaggehäuse vorgesehen. Weiter ist in der US 5,547,215 vorgesehen, eine Airbagaustrittöffnung schräg anzuordnen, damit kein Airbag mehr während des Aufblasens in Kontakt mit der Windschutzscheibe gelangen kann. Der US 6,193,271 liegt dagegen ein Aufbau zugrunde, bei dem die Airbagaustrittöffnung im potentiellen Aufprallbereich angeordnet ist. Entsprechendes wäre der Fall, falls der Aufbau gemäß der DE 198 60 804 A1 auf einen Beifahrerbereich einer Instrumententafel übertragen würde.

Aufgabe der Erfindung ist es, eine Airbaganordnung an einer Instrumententafel eines Fahrzeugs, insbesondere eines Kraftfahrzeugs, zu schaffen, mit der die Aggressivität von sich aufblasenden Airbags gegenüber Fahrzeuginsassen, insbesondere von sich im Beifahrerbereich out-off-position befindlichen Fahrzeuginsassen, erheblich reduziert werden kann.

Diese Aufgabe wird gelöst mit den Merkmalen des Anspruchs 1.

Gemäß Anspruch 1 weist die im vorderen Instrumententafelwandbereich ausbildbare Airbagaustrittöffnung einen vorgegebenen Sicherheitsabstand zu einem potentiellen Kopfaufprallbereich eines Fahrzeuginsassen in einem sich von der Windschutzscheibe weg in Richtung Fahrzeuginnenraum an den vorderen Instrumententafelwandbereich hin anschließenden Kopfaufprall-Instrumententafelwandbereich auf. Der Sicherheitsabstand ist so vorgegeben, dass der Airbag nach einem dem Sicherheitsabstand zwischen der Airbagaustrittöffnung und dem potentiellen Kopfaufprallbereich entsprechenden Vorschubweg in Richtung Fahrzeuginnenraum einen Fülldruck aufweist, der gegenüber dem anfänglichen Fülldruck im Airbag zu Beginn der Airbagaktivierung entsprechend vorgegebener Grenzwerte reduziert ist.

Mit einem derartigen bei der Auslegung der Instrumententafel zu berücksichtigenden Sicherheitsabstand zwischen der Airbagaustrittöffnung und einem instrumententafelseitigen potentiellen Kopfaufprallbereich eines Fahrzeuginsassen wird vorteilhaft eine solche Tiefe einer Instrumententafel in Fahrzeuglängsrichtung erreicht, dass insbesondere bei sich outoff-position befindlichen Fahrzeuginsassen im Beifahrerbereich die Gefahr einer Beeinträchtigung der Fahrzeuginsassen erheblich reduziert wird, da der durch die Airbagaustrittöffnung im vorderen Instrumententafelwandbereich austretende Airbag bis zum Auftreffen auf den Fahrzeuginsassen bereits einen erheblichen Teil seines sehr hohen anfänglichen Fülldrucks abgebaut hat, so dass der Aufprall des Airbags auf den Fahrzeuginsassen sehr viel weniger aggressiv ist. Je größer der Sicherheitsabstand zwischen der Airbagaustrittöffnung und dem potentiellen Kopfaufprallbereich einer Instrumententafel ist, d. h. je größer die Tiefe der Instrumententafel in einem solchen Fall ist, desto geringer ist die Aggressivität des Airbags bei einem tatsächlichen Auftreffen auf einen Fahrzeuginsassen, da der Fülldruck im Airbag insbesondere zu Beginn der Airbagentfaltung mit jedem zurückgelegten Zentimeter erheblich abnimmt.

Aufgrund des erfindungsgemäßen Sicherheitsabstandes an der Instrumententafel kann somit eine Airbaganordnung an einer Instrumententafel geschaffen werden, bei der der Airbag nach wie vor unmittelbar in Richtung auf den gewünschten Aufblasbereich zu aufgeblasen werden kann, wobei jedoch der Fülldruck im Airbag entlang des Sicherheitsabstandes der Instrumententafel so weit abgebaut wird, vorzugsweise bis zum gewünschten Endfülldruck des Airbags, dass die Aggressivität des Airbags beim Auftreffen auf einen sich out-offposition befindlichen Fahrzeuginsassen so weit wie möglich reduziert ist Aufgrund des hohen anfänglichen Fülldrucks kann der Airbag während des Aufblasens den Sicherheitsabstand sehr schnell überwinden, so dass es dadurch auch zu keiner nennenswerten Verzögerung beim Aufblasen des Airbags vor einem Fahrzeuginsassen kommt, der sich z. B. in einer normalen Sitzposition befindet.

Gemäß einer besonders bevorzugten Ausgestaltung ist der Sicherheitsabstand so festgelegt, dass der Fülldruck im Airbag nach einem Vorschubweg des Airbags entsprechend dem festgelegten Sicherheitsabstand im potentiellen Kopfaufprallbereich höchstens noch in etwa 15 %, bevorzugt höchstens in etwa 10 % und höchst bevorzugt höchstens in etwa 5 % des anfänglichen Gasdrucks beträgt. Da der Fülldruck im Airbag eine Funktion des zurückgelegten Weges ist, soll der Sicherheitsabstand nach einer weiteren bevorzugten Ausgestaltung in Abhängigkeit von der jeweiligen Aufprallsituation z. B. wenigstens in etwa 10 cm, bevorzugt jedoch wenigstens 15 cm und höchst bevorzugt wenigstens in etwa 20 cm betragen. Dadurch lassen sich sehr gute Ergebnisse hinsichtlich der verringerten Aggressivität des Airbags erzielen. Gemäß einer konkreten Ausführungsform weist der Airbag einen anfänglichen Fülldruck zwischen in etwa 30 bar und 35 bar auf und beträgt der Fülldruck nach einem Vorschubweg von in etwa 100 mm in etwa 2,5 bis 3,5 bar und vorzugsweise nach einem Vorschubweg von in etwa 200 mm in etwa 1,5 bis 2,5 bar. Gemäß einer derartigen konkreten Ausführungsform hat der Airbag somit nach einem Vorschubweg von in etwa 100 mm in etwa 90 % und nach einem Vorschubweg von in etwa 200 mm in etwa 95 % seines anfänglichen Fülldrucks abgebaut, wobei der gewünschte Fülldruck im Airbag am Ende des Aufblasvorgangs in etwa 1,5 bis 2,5 bar beträgt. Mit einem derartigen konkreten Aufbau wird somit vorteilhaft erreicht, dass bei einem Sicherheitsabstand von in etwa 200 mm die Aggressivität des Airbags in der maximal möglichen Weise reduziert ist. Bereits bei einem Sicherheitsabstand von etwa 100 mm ist die Aggressivität des Airbags hier so reduziert, dass die Beeinträchtigungsgefahr für die Fahrzeuginsassen, insbesondere für Kinder, die sich im Beifahrerbereich out-of-position befinden, erheblich reduziert ist.

Grundsätzlich gibt es verschiedene Möglichkeiten, den Anfangs- und Endpunkt der dem Sicherheitsabstand entsprechenden Wegstrecke festzulegen. So ist es z. B. möglich, den einen Endpunkt des Sicherheitsabstandes in etwa in einem mittleren Bereich der ausbildbaren Airbagaustrittöffnung festzulegen und auch den anderen Endpunkt in etwa in einem mittleren Bereich des potentiellen Kopfaufprallbereichs der Instrumententafel festzulegen. Besonders bevorzugt ist der Sicherheitsabstand im Querschnitt durch die Instrumententafel gesehen jedoch in etwa die geradlinige kürzeste Verbindung zwischen dem der Airbagaustrittöffnung zugewandten Beginn des potentiellen Kopfaufprallbereichs und dem dem potentiellen Kopfaufprallbereich zugewandten Beginn der Airbagaustrittöffnung. Dadurch können etwaige Ungenauigkeiten von vorne herein minimiert und eine Auslegung optimiert werden. Zudem stellt hier dann vorzugsweise der Beginn des Kopfaufprallbereichs den Grenzbereich dar, auf den je nach den unterschiedlichen Kopfaufprallsituationen, z. B. bei stehendem Kind mit 3 Jahren und bei sitzendem Kind, unangegurtet, mit 6 Jahren entsprechend vorgegebener Versuchsbedingungen, ein Fahrzeuginsasse mit dem Kopf aufprallen kann. Denn abhängig von der Ausgangsposition kann der Kopfaufprall einmal mehr und einmal weniger in Richtung vorderer Instrumententafelbereich liegen. Der Sicherheitsabstand ist hier dann vorzugsweise von dem Bereich des potentiellen Kopfaufprallbereichs aus gesehen gemessen, der von allen Situationen am nächsten in Richtung zur Airbagaustrittöffnung liegt. Dies erhöht die Funktionssicherheit wesentlich.

Weiter besteht grundsätzlich die Möglichkeit, dass der Gasgenerator entfernt vom Airbag angeordnet ist, z. B. mit diesem über eine Gaslanze verbunden ist. Besonders bevorzugt ist jedoch gemäß einer weiteren besonders bevorzugten Ausführungsform der Erfindung, dass der wenigstens eine Airbag Bestandteil eines Airbagmoduls ist, das wenigstens einen dem wenigstens einen Airbag zugeordneten Gasgenerator als Fülleinrichtung umfasst, wobei der wenigstens eine Airbag und der wenigstens eine Gasgenerator in einem Airbaggehäuse aufgenommen sind. Am Airbaggehäuse ist ein Gehäuse-Austrittbereich für den Airbag vorgesehen, der dem instrumententafelseitigen Airbagaustrittwandbereich zugeordnet ist. Mit einem derartigen Aufbau wird somit vorteilhaft erreicht, dass das gesamte Airbagmodul bestehend aus Airbaggehäuse, Airbag und Gasgenerator im montierten Zustand von dem potentiellen Kopfaufprallbereich im hinteren Instrumententafelbereich weg nach vorne in Richtung zum vorderen Instrumententafelbereich verlagert ist. Dadurch kann der hier gewonnene Freiraum im Bereich unterhalb des potentiellen Kopfaufprallbereichs der Instrumententafel vorteilhaft anderweitig genutzt werden. So z. B. dergestalt, dass der potentielle Kopfaufprallbereich der Instrumententafel wenigstens bereichsweise aus einem energieabsorbierenden Material hergestellt ist. Besonders bevorzugt ist der potentielle Kopfaufprallbereich hier aus einem unter Energieabsorption deformierbaren Material hergestellt und ist der gewonnene Freiraum unterhalb des potentiellen Kopfaufprallbereichs der Instrumententafel als Deformationsraum ausgebildet, so dass bei einem Kopfaufprall auf den potentiellen Kopfaufprallbereich dieser Bereich der instrumententafel unter Energieabsorption ungehindert in den Deformationsraum hinein verformbar ist. Mit einem derartigen Deformationsraum wird vorteilhaft ein frühzeitiges auf Block gehen desjenigen Instrumententafelbereichs, auf den der Fahrzeuginsasse aufprallt und der sich deformiert, vermieden, so dass relativ viel Aufprallenergie absorbiert werden kann, was zu einer erheblichen Reduzierung der Beeinträchtigungsgefahr für den Fahrzeuginsassen führt.

In einer bevorzugten Ausgestaltung hierzu ist im Verbindungsbereich zwischen einem den Gasgenerator aufnehmenden Gasgenerator-Gehäusebereich und einem den Airbag aufnehmenden Airbag-Gehäusebereich wenigstens eine Materialschwächung bzw. Sollbruchstelle vorgesehen, die bei einer Krafteinwirkung auf einen der beiden Gehäuseteile, insbesondere bei einer Krafteinwirkung auf den wenigstens bereichsweise in einen deformierbar gestalteten potentiellen Kopfaufprallbereich der Instrumententafel ragenden Gasgenerator-Gehäusebereich, bricht und ein auf Block gehen des Deformationsbereiches verhindert. Mit einem derartigen Aufbau, bei dem Sollbruchstellen oder alternativ Materialschwächungen vorgesehen sind, wird erreicht, dass ein sich in einem Deformationsbereich befindlicher Gehäuseteilbereich, wie dies insbesondere bei besonders beengten Einbauverhältnissen der Fall sein kann, die Deformation nicht zu sehr behindert. Die Sollbruchstelle bzw. Materialschwächung kann dabei so ausgebildet sein, dass der Gasstrom in den Airbag hinein vollständig unterbunden wird, falls dies erwünscht ist, indem z. B. der eine Gehäuseteilbereich abgesprengt wird. Alternativ dazu kann jedoch auch eine Materialschwächung z. B. in Form einer plastischen Verformung vorgesehen sein, die nach wie vor einen Gasstrom in den Airbag ermöglicht.

Beispielsweise kann der potentielle Kopfaufprallbereich der Instrumententafel im Wesentlichen aus einer vorzugsweise mit einer Slushhaut überzogenen Trägerschicht aus einem Energieabsorptionsschaum hergestellt sein. Ein derartiger Aufbau ist bei einer hohen Effektivität auch relativ günstig realisierbar.

Ein weiterer Vorteil dieser Verlagerung des Airbagmoduls in Richtung zum der Frontscheibe zugewandten vorderen Instrumententafelbereich hin ist, dass der dadurch unterhalb des potentiellen Kopfaufprallbereichs der Instrumententafel gewonnene Freiraum auch dazu genutzt werden kann, dass im Montagefreiraum ein Luftkanal, insbesondere ein Hauptluftkanal der Hauptluftversorgung zu Personenausströmerdüsen, angeordnet werden kann. Dieser Luftkanal kann integral mit einer Instrumententafelunterseite ausgebildet sein, wobei bevorzugt ein Unterseitenwandbereich der Instrumententafel Bestandteil der Luftkanalwand bildet. Alternativ dazu kann der Luftkanal aber auch auf andere Art und Weise, z. B. mit geschlossenem Querschnitt, ausgebildet sein und beispielsweise über andere Befestigungsmöglichkeiten, z. B. Schraubverbindungen und/oder Clipverbindungen und/oder Schweißverbindungen mit der Instrumententafelunterseite verbunden sein. Besonders bevorzugt bei einem derartigen neuen Luftkanalkonzept ist, dass sich hierdurch kürzeste Verbindungswege des Luftkanals zu den Hauptausströmdüsen im hinteren, den Fahrzeuginsassen zugewandten Instrumententafelbereich ergeben. Ein derartiger Aufbau, bei dem sich die Hauptluftkanäle im hinteren Instrumententafelbereich befinden, ist vollständig umgekehrt zum bisher verfolgten Konzept, bei dem der Hauptluftkanal stets im vorderen Instrumententafelbereich angeordnet ist. Ein weiterer Vorteil dieses Aufbaus, bei dem der Luftkanal sich unterhalb des potentiellen Kopfaufprallbereichs der Instrumententafel befindet, ist, dass dieser Luftkanal kein tragendes und steifes Bauteil ist, das eine eventuell notwendige Deformation des potentiellen Kopfaufprallbereichs der Instrumententafel in den Freiraum als Deformationsraum hinein zu sehr beeinträchtigt, da der Luftkanal diese Deformationsbewegung ohne weiteres mitmachen kann.

Gemäß einer weiteren besonders bevorzugten Ausgestaltung der Airbaganordnung ist vorgesehen, dass unterhalb des instrumententafelseitigen Airbagaustrittwandbereichs eine Airbagmodul-Aufnahmeeinrichtung vorgesehen ist, mit der das Airbagmodul zur Festlegung in seiner Einbauposition lösbar verbindbar ist. Eine derartige Airbagmodul-Aufnahmeeinrichtung stellt eine wesentliche Einbauhilfe zur Festlegung des Airbagmoduls in seiner Einbauposition dar. Besonders einfach kann die Festlegung dann erfolgen, wenn das Airbagmodul mittels wenigstens einer Führungseinrichtung mit der Airbagmodul-Aufnahmeeinrichtung verbindbar ist, da das Airbagmodul dann im Rahmen der Montage bzw. im Rahmen der Demontage zur Verbindung mit der Airbagmodul-Aufnahmeeinrichtung lediglich noch ein- bzw. ausgeschoben werden muss, wie dies beispielsweise im Kundendienstfall erforderlich ist.

Insbesondere ist eine Festlegung des Airbagmoduls oberhalb des Modulträgers problematisch, d. h. in einem Spaltbereich zwischen dem instrumententafelseitigen Airbagaustrittwandbereich und dem Modulträger, da dieser Spaltbereich z. B. bei Kundendienstmaßnahmen nur schlecht mit Werkzeug oder anderen Hilfsmitteln zugänglich ist und somit keine einfache Demontage und Montage des Airbagmoduls bzw. Ersatzmoduls möglich ist, ohne dass hierfür umfangreiche Umbaumaßnahmen, wie z. B. der Ausbau der Instrumententafel, erforderlich sind. Ein Ausbau des Airbagmoduls ist jedoch stets nur als Ganzes möglich, da die Hersteller derartiger Airbagmodule eine Gewährleistung und Garantie nur für das gesamte Modul im nicht demontierten Zustand übernehmen. Mit der wenigstens einen Führungseinrichtung kann das Airbagmodul jedoch in Fahrzeughochachsenrichtung gesehen im Wesentlichen von unterhalb des Modulträgers sowie in Fahrzeuglängsachsenrichtung gesehen im Wesentlichen von hinterhalb des Modulträgers her in den Spaltbereich zwischen dem instrumententafelseitigen Airbagaustrittwandbereich und dem Modulträger geführt aus- und/oder eingeschoben und fixiert werden. Vorteilhaft wird bei einem derartigen Aufbau somit die Montage und Demontage des gesamten Airbagmoduls, insbesondere im Kundendienstbereich wesentlich erleichtert, da das Airbagmodul von unten hinten her gut zugänglich ein- und ausgebaut werden kann, ohne dass hierfür sich auf der Modulträgeroberseite befindliche Befestigungselemente, wie z. B. Schrauben etc., gelöst werden müssen. Dadurch braucht somit im Falle einer Demontage und Montage im Kundendienstbereich kein aufwendiger Ausbau der Instrumententafel stattfinden, um das Airbagmodul für einen Ein- oder Ausbau zugänglich zu machen.

In einer besonders bevorzugten, konkreten Ausgestaltung ist das Airbaggehäuse kastenförmig aufgebaut mit gegenüberliegenden Airbaggehäuse-Seitenwänden. Das Airbaggehäuse ist im eingeschobenen Zustand des Airbagmoduls von der als Airbagmodul-Aufnahmegehäuse ausgebildeten Airbaggehäuse-Aufnahmeeinrichtung wenigstens mit den Airbaggehäuse-Seitenwänden zugeordneten Aufnahmegehäuse-Seitenwänden umgriffen, wobei die wenigstens eine Führungseinrichtung im Bereich der Seitenwände des Airbaggehäuses und des Airbagmodul-Aufnahmegehäuses ausgebildet ist. An jeder Airbaggehäuse-Seitenwand ist ein erstes Führungselement angeordnet, das mit einem entsprechend an der jeweils zugeordneten Aufnahmegehäuse-Seitenwand ausgebildeten zweiten Führungselement zusammenwirkt. Bei einem derartigen Aufbau, bei dem die wenigstens eine Führungseinrichtung im Bereich von gegenüberliegenden Seitenwänden ausgebildet ist, ist eine besonders gute und gezielte Führung während des Einschiebens oder Ausschiebens des Airbaggehäuses in das Airbagmodul-Aufnahmegehäuse gegeben. Besonders bevorzugt ist die wenigstens eine Führungseinrichtung als Führungskulissenanordnung mit einem Führungsschlitz und einem darin geführten Führungszapfen als Kulissenstein ausgebildet. Ein derartiger, konkreter Aufbau einer Führungseinrichtung ist relativ einfach und preiswert bei hoher Funktionssicherheit herstellbar.

Der wenigstens eine Führungsschlitz ist bevorzugt an der Airbagmodul-Aufnahmeeinrichtung, z. B. in der Aufnahmegehäuse-Seitenwand, ausgebildet, während der wenigstens eine Führungszapfen am Airbaggehäuse ausgebildet ist. Grundsätzlich wäre jedoch auch ein Aufbau denkbar, bei dem in umgekehrter Weise ein Führungszapfen in der Aufnahmegehäuse-Seitenwand ausgebildet ist und entsprechend zugeordnet der Führungsschlitz, z. B. in der Art einer Führungsnut, am Airbaggehäuse ausgebildet ist.

In einer weiteren bevorzugten, konkreten Ausgestaltung ist der Führungsschlitz an der Aufnahmegehäuse-Seitenwand mit einem ersten Schlitzbereich in einem bezogen auf die Instrumententafel in Fahrzeuglängsachsenrichtung gesehen hinteren Seitenwandbereich, der im Wesentlichen auch hinten über den Modulträger übersteht, von einem bezogen auf die Fahrzeughochachsenrichtung unteren Seitenwandrandbereich ausgehend nach schräg oben bis in einen bezogen auf die Fahrzeughochachsenrichtung oberen Seitenwandbereich geführt. Weiter ist der Führungsschlitz an der Aufnahmegehäuse-Seitenwand mit einem sich an den ersten Schlitzbereich unmittelbar anschließenden zweiten Schlitzbereich in einem bezogen auf die Instrumententafel in Fahrzeuglängsrichtung gesehen vorderen Seitenwandbereich, vom ersten Schlitzbereich ausgehend an der Aufnahmegehäuse-Seitenwand in Fahrzeuglängsrichtung gesehen nach vorne geführt. Mit einer derartigen Schlitzgeometrie wird ein besonders einfaches und funktionssicheres Einschieben und Ausschieben des Airbagmoduls in das Aufnahmegehäuse ermöglicht.

Grundsätzlich könnte der gesamte Führungsschlitz hier ohne Unterteilung in einzelne Schlitzbereiche stetig ansteigend ausgebildet sein. Gemäß einer besonders bevorzugten Ausgestaltung ist jedoch der zweite Schlitzbereich zuerst im Wesentlichen waagrecht und anschließend mit im Vergleich zum ersten Schlitzbereich geringerem Anstiegswinkel nach vorne geführt, wobei vorzugsweise der waagrechte Teilbereich des zweiten Schlitzbereichs im Wesentlichen oberhalb des Modulträgers verläuft. Mit einer derartigen Schlitzgeometrie wird erreicht, dass unmittelbar nach dem Einfädeln der Führungszapfen nach dem Durchlaufen des ersten Schlitzbereichs im Bereich oberhalb des Modulträgers ein auf Block gehen dadurch verhindert wird, dass durch den waagrechten Teilbereich ein Abkippen des vordersten Airbaggehäuse-Randbereichs besonders einfach ermöglicht wird, was insbesondere dann problematisch ist, wenn das Airbagmodul-Aufnahmegehäuse eine das Airbagmodul überdeckende obere Wand aufweist. Anschließend kann dann ein weiteres Verschieben des Airbagmoduls über die Führungseinrichtung in die gewünschte Endposition erzielt werden.

Die Dimensionierung der Führungseinrichtung ist vorzugsweise so gewählt, dass sich der Führungsschlitz in etwa über die in Fahrzeuglängsrichtung gesehen gesamte Aufnahmegehäuse-Seitenwandlänge erstreckt. Das heißt, dass das Airbagmodul-Aufnahmegehäuse hinsichtlich seiner Auslegung und Dimensionierung optimal an die Erfordernisse für das Einschieben oder Ausschieben des Airbagmoduls in das Airbagmodul-Aufnahmegehäuse angepasst ist.

Der Führungsschlitz ist an den gegenüberliegenden Aufnahmegehäuse-Seitenwänden vorzugsweise jeweils gleich ausgebildet, so dass auf gegenüberliegenden Seiten für eine gezielte und geführte Führung beim Einschieben oder Ausschieben gleiche Verhältnisse gegeben sind. Dadurch kann die Funktionssicherheit wesentlich erhöht werden.

Gemäß einer weiteren, bevorzugten Ausführungsform ist der Führungszapfen an den gegenüberliegenden Airbaggehäuse-Seitenwänden jeweils in einem der Instrumententafel zugewandten, vorderen Airbaggehäuse-Seitenwandbereich angeordnet. Dadurch ist ein insgesamt kompakter Aufbau möglich, da im montierten und eingeschobenen Zustand des Airbagmoduls eine im Wesentlichen unmittelbare Anlageverbindung des Aufnahmegehäuses an dem Airbaggehäuse ausbildbar ist.

Besonders bevorzugt ist das der instrumententafel zugeordnete vordere Führungsschlitzende als Rastaufnahme ausgebildet, in das der Führungszapfen in der eingeschobenen Endposition des Airbagmoduls lösbar einrastbar ist. Dies kann z. B. dadurch geschehen, dass die Rastaufnahme als U-Profil ausgebildet ist, in dem der Führungszapfen aufgenommen ist. Eine derartige Rastaufnahme ist z. B. dann von Vorteil, wenn große Rückstoßkräfte gegeben sind, die ggfs. bei einer Aktivierung des Airbags das Airbaggehäuse nach hinten aus dem Aufnahmegehäuse herausdrücken würden. Eine sichere Fixierung des Airbaggehäuses im Aufnahmegehäuse kann alternativ oder zusätzlich auch dadurch erreicht werden, dass der Führungszapfen im Führungsschlitz überdrückbar verklemmt ist, so dass der Führungszapfen nur bei Überschreiten einer bestimmten Klemmkraft als Widerstandskraft gegen das Einschieben verschiebbar ist.

Besonders bevorzugt ist ein Aufbau, bei dem das Airbaggehäuse des Airbagmoduls im in das Airbagmodul-Aufnahmegehäuse eingeschobenen Zustand in etwa formschlüssig in diesem aufgenommen ist und eine Aufnahmegehäuse-Oberwand das Airbaggehäuse von oben her abdeckt. Dadurch wird einerseits ein sehr kompakter Aufbau möglich, wie er insbesondere für beengte Einbauverhältnisse, wie sie im Spaltbereich zwischen dem Modulträger und der Instrumententafel gegeben sind, vorteilhaft ist. Andererseits ist dadurch auch eine sichere Fixierung und Abstützung des Airbaggehäuses im Airbagmodul-Aufnahmegehäuse gewährleistet.

Gemäß einer weiteren, bevorzugten Ausgestaltung kann alternativ oder zusätzlich zu anderen Befestigungsmaßnahmen vorgesehen sein, dass das Airbaggehäuse mit dem Aufnahmegehäuse in einem von unten her gut zugänglichen Montagebereich, der bezogen auf die Instrumententafel in Fahrzeuglängsrichtung in Richtung Fahrzeuginnenraum gesehen hinter dem Modulträger liegt, mittels wenigstens einer lösbaren Verbindung, z. B. einer Clip- und/oder Schraubverbindung verbindbar ist. Zur Lösung dieser z. B. Schraubverbindungen kann z. B. im Rahmen des Kundendienstes einfach von unten her mit einem entsprechenden Schraubenzieher oder dergleichen die Schraubverbindung gelöst werden. Anschließend kann dann das Airbaggehäuse über die erfindungsgemäße Führungseinrichtung aus dem Aufnahmegehäuse nach unten hinten ausgeschoben werden. Analog dazu kann dann bei einer neuen Montage eines Austauschairbagmoduls dann dieses in der zuvor beschriebenen Weise wieder in das Airbagmodul-Aufnahmegehäuse eingeschoben werden und anschließend ebenfalls wieder die wenigstens eine Schraubverbindung hergestellt werden. Mit derartigen Schraubverbindungen ist eine besonders vorteilhafte Fixierung des Airbaggehäuses im Airbagmodul-Aufnahmegehäuse möglich, die zudem einfach zugänglich ist.

Vorteilhaft ist die wenigstens eine lösbare Verbindung in einem Flanschbereich des Airbagmodul-Aufnahmegehäuses und des Airbaggehäuses angeordnet, der in Fahrzeuglängsrichtung in Richtung Fahrzeuginnenraum gesehen nach hinten wegragt.

Im montierten Zustand weist das Airbaggehäuse vorteilhaft einen Spaltabstand zu einem darunter liegenden Modulträger auf, wobei der Spaltabstand in etwa 8 bis 10 mm betragen kann. Durch diesen Spaltabstand ist eine klapperfreie Anordnung des Airbagmoduls oberhalb des Modulträgers gewährleistet.

Grundsätzlich gibt es je nach konkret gegebener Einbausituation verschiedene Möglichkeiten, das Airbagmodul-Aufnahmegehäuse im Spaltbereich zwischen der Instrumententafel und dem Modulträger anzuordnen. So kann beispielsweise das Airbagmodul-Aufnahmegehäuse besonders bevorzugt im Rahmen der Vormontage an der Instrumententafel befestigt werden. Alternativ oder zusätzlich dazu kann jedoch auch eine Festlegung des Airbagmodul-Aufnahmegehäuses auf dem Modulträger erfolgen.

Besonders bevorzugt ist ein Airbagaustrittbereich des Airbagmodul-Aufnahmegehäuses im montierten Zustand unmittelbar dem Airbagaustrittbereich in der Instrumententafel zugeordnet, wodurch sich ein hervorragendes Aufblasverhalten für einen Airbag, insbesondere in Verbindung mit einem sich nicht in einer normalen Sitzposition befindlichen Fahrzeuginsassen ergibt. Zur Ausbildung des Airbagaustrittbereichs des Airbagmodul-Aufnahmegehäuses kann wenigstens eine Trennlinie oder Sollaufreißlinie am Airbagmodul-Aufnahmegehäuse vorgesehen sein. Gemäß einer weiteren besonders bevorzugten Ausgestaltung hierzu ist der Airbagaustrittbereich des Airbagmodul-Aufnahmegehäuses in einer Aufnahmegehäuse-Oberwand ausgebildet.

Besonders bevorzugt liegen die den Airbagaustrittbereich des Airbagmodul-Aufnahmegehäuses und die den Airbagaustrittbereich in der Instrumententafel bildenden Bereiche des Aufnahmegehäuses und der Instrumententafel in einer Anlageverbindung aneinander und bilden eine in Richtung zur Windschutzscheibe hin aufschwenkbare Abdeckklappe zur Freigabe der Airbagaustrittöffnung aus. Besonders bevorzugt sind die Bereiche als Materialverbund ausgebildet, so dass sich lediglich eine einzige aufschwenkbare Abdeckklappe ergibt. Ein derartiger Aufbau ist besonders einfach ohne großen Bauteilaufwand und ohne großen Materialaufwand herzustellen. Besonders bevorzugt schirmt die Abdeckklappe dabei im aufgeklappten Zustand wenigstens zu Beginn des Aufblasvorgangs einen direkten Aufprall des Airbags auf die Windschutzscheibe ab und leitet zudem den Airbag in Richtung Fahrzeuginnenraum. Mit einer derartigen fischmaulartig aufschwenkbaren Abdeckklappe ergibt sich somit auch die Möglichkeit, den Airbag in einer besonders vorteilhaften Art und Weise in die gewünschte Richtung, d. h. in Richtung Aufblasbereich vor einem Fahrzeuginsassen zu lenken.

Um zu verhindern, dass die Abdeckklappe während des Aufklappens nicht mit hoher Wucht auf die Windschutzscheibe auftrifft, können Rückhaltemittel vorgesehen sein, die so mit der oder den Abdeckklappen gekoppelt sind, dass diese im aufgeklappten Zustand nicht auf die Windschutzscheibe auftreffen. Als Rückhaltemittel kann beispielsweise wenigstens ein Anschlag und/oder wenigstens ein Fangband oder dergleichen vorgesehen sein. Derartige Rückhaltemittel sind einfach herstellbar und weisen eine hohe Funktionssicherheit auf.

Gemäß einer besonders bevorzugten Ausgestaltung ist das Airbagmodul-Aufnahmegehäuse mit einem an den Airbagaustrittbereich des Airbagmodul-Aufnahmegehäuses angrenzenden Widerlagerbereich fest mit der Instrumententafel verbunden. Diese Verbindung kann z. B. durch Vernieten oder dergleichen erfolgen. Mit einem derartigen Widerlagerbereich wird vorteilhaft ein Widerlager geschaffen, das die Instrumententafel in diesem Bereich in der ursprünglichen Form hält, d. h. das verhindert, dass durch die Aufreißbewegung im Airbagaustrittbereich der Instrumententafel ein unerwünschtes Aufpilzen der Instrumententafel im Widerlagerbereich erfolgt. Insgesamt kann daher eine besonders stabile und funktionssichere Anordnung mit einem derartigen Widerlagerbereich geschaffen werden.

Der Widerlagerbereich kann grundsätzlich einstückig mit dem Rest des Airbagmodul-Aufnahmegehäuses ausgebildet sein. Besonders bevorzugt ist der Widerlagerbereich des Airbagmodul-Aufnahmegehäuses jedoch als separates Bauteil ausgebildet, das mit der Instrumententafel verbindbar ist. Bei einem derartigen Aufbau, bei dem der Widerlagerbereich als separates Bauteil ausgebildet ist, kann der Widerlagerbereich in montagetechnisch besonders vorteilhafter Weise bereits unmittelbar zu Beginn der Montage mit der Instrumententafel durch z. B. Vernieten verbunden werden. Anschließend kann dann im weiteren Verlauf der Montage der Widerlagerbereich mit dem Rest des Airbagmodul-Aufnahmegehäuses verbunden werden, vorzugsweise mittels einer Niet- und/oder Schraub- und/oder Clipverbindung oder dergleichen.

In einer konkreten Ausführungsform ist der Widerlagerbereich in etwa U-förmig ausgebildet und mit einem U-Basisbereich mit der Instrumententafelunterseite verbindbar. Der Widerlagerbereich umgreift mit den U-Schenkeln einen Teil des Restes des Airbagmodul-Aufnahmegehäuses, vorzugsweise im Bereich eines dort aufgenommenen Gasgenerators, und ist dort in montagetechnisch besonders einfacher und auch gut zugänglicher Weise mit dem Rest des Airbagmodul-Aufnahmegehäuses verbunden.

Gemäß einer weiteren bevorzugten konkreten Weiterbildung ist das Airbaggehäuse so ausgebildet, dass der darin aufgenommene wenigstens eine Airbag im montierten Grundzustand seitlich neben dem wenigstens einen Gasgenerator angeordnet ist. Dadurch wird eine flache und kompakte Bauweise erzielt, wie dies insbesondere für einen beengten Einbauraum im Spaltbereich oberhalb eines Modulträgers von wesentlichem Vorteil ist.

Gemäß einer besonders bevorzugten weiteren Ausgestaltung der Erfindung weist wenigstens der der Windschutzscheibe zugewandte vordere Instrumententafelwandbereich wenigstens bereichsweise Luftdurchtrittsöffnungen zur diffusen Belüftung des Fahrzeuginnenraums auf. Bei einer derartigen Ausgestaltung des Instrumententafelwandbereichs wird die Luftaustrittsgeschwindigkeit im Bereich der Luftdurchtrittsöffnungen im Gegensatz zu herkömmlichen Ausströmdüsen erheblich reduziert, so dass es zu keiner von den Fahrzeuginsassen als unangenehm empfundenen zugigen Belüftung aufgrund von hohen Luftausströmgeschwindigkeiten kommt. Mit einer derartigen diffusen Belüftung kann somit für die Fahrzeuginsassen ein angenehmes Raumklima geschaffen werden, indem der Fahrzeuginnenraum sanft mit Frischluft versorgt wird. Zudem kann mit einer derartigen diffusen Belüftung der Geräuschpegel im Fahrzeuginnenraum erheblich reduziert werden, da die Luft hier nicht mehr mit einer den hohen Geräuschpegel verursachenden hohen Geschwindigkeit, wie dies bei herkömmlichen Ausströmdüsen der Fall ist, in den Fahrzeuginnenraum einströmt. Zugleich kann mit einer derartigen diffusen Belüftung des Oberseitenbereichs einer Instrumententafel auch gleichzeitig die Wärmeabstrahlung der Instrumententafel in Folge von Sonneneinstrahlung erheblich reduziert werden.

Besonders bevorzugt ist hier gemäß einer konkreten Ausführungsform in einem tragenden Grundkörper des vorderen Instrumententafelkörpers wenigstens eine Ausströmdüse integriert, wobei der Grundkörper von oben her mittels einer Abdeckung abgedeckt ist. Diese Abdeckung ist durchgehend perforiert mit einem Perforationsmuster dergestalt, dass über die Perforierungen als Luftdurchtrittsöffnungen im Bereich der wenigstens einen Ausströmdüse eine diffuse Belüftung einstellbar ist. Wenigstens ein Teilbereich der Perforierungen ist in Verbindung mit dem darunter liegenden Grundkörper so mittels wenigstens einer Materialschwächung und/oder Sollbruchstelle versehen, dass darin die Airbagaustrittöffnung ausbildbar ist. In Verbindung mit einer derartigen perforierten Abdeckung lassen sich die z. B. Materialschwächungen hervorragend kaschieren, falls dies gewünscht ist. Zudem kann die Abdeckung hier in einer Doppelfunktion sowohl als Abdeckung eines Grundkörpers zur Ausbildung einer Einrichtung zur diffusen Belüftung als auch als Abdeckklappe für eine Airbagaustrittöffnung fungieren. Besonders bevorzugt ist hier ein Aufbau, bei dem im Bereich des instrumententafelseitigen Airbagaustrittbereichs im Grundkörper eine Aussparung vorgesehen ist und bei dem die perforierte Abdeckung in diesem Bereich zur Ausbildung wenigstens einer aufschwenkbaren Abdeckklappe mit entsprechenden Sollbruchstellen versehen ist und die Aussparung von oben her abdeckt. Eine derartige Abdeckklappe ist besonders einfach mit wenig Anpresskraft auf- und überdrückbar, so dass bereits dadurch der anfängliche Fülldruck erheblich reduziert werden kann. Dies trägt ebenfalls erheblich dazu bei, die Aggressivität des Airbags insgesamt zu reduzieren.

Eine besonders optimale Krafteinwirkung auf die Abdeckung zur Freigabe der Airbagaustrittöffnung ergibt sich dann, wenn ein Gasstrahl einer Fülleinrichtung, vorzugsweise eines Gasgenerators, direkt auf den Airbagaustrittbereich gerichtet ist.

Weiter ist eine besonders vorteilhafte Entfaltungscharakteristik des Airbags gegeben, wenn der Gasstrahl vom Gasgenerator, mittig in den zusammengefalteten Airbag einbläst.

Ein besonders vorteilhafter Aufbau ergibt sich zudem, wenn der Gehäuse-Austrittbereich des Airbaggehäuses mittels einer Schutzabdeckung verschlossen ist, die den Airbag einerseits im zusammengefalteten Zustand im Gehäuse hält und die andererseits bei aktiviertem Airbag in einem mittleren Bereich unter Bildung wenigstens zweier Klappenteile eine Gehäuse-Austrittöffnung freigibt, wobei die aufgeklappten Klappenteile wenigstens bereichsweise einen Kantenschutz ausbilden dergestalt, dass sie angrenzende Kantenbereiche abdecken. Dadurch wird vorteilhaft eine Beschädigung des sich entfaltenden Airbags an scharfen Kanten vermieden.

Grundsätzlich kann die Airbaganordnung in unterschiedlichen Instrumententafelbereichen eingesetzt werden. Besonders bevorzugt ist die Airbaganordnung jedoch als Beifahrerairbag im Beifahrerbereich eines Fahrzeugs angeordnet.

Die Erfindung wird nachfolgend anhand einer Zeichnung näher erläutert.
Es zeigen:
- Fig. 1: einen schematischen Querschnitt durch eine Instrumententafel im Beifahrerbereich mit einer erfindungsgemäßen Airbaganordnung in einem nicht aktivierten Grundzustand der Airbaganordnung,
- Fig. 2: eine schematische Darstellung gemäß Fig. 1 zu Beginn der Airbagaktivierung,
- Fig. 3: eine schematische Darstellung entsprechend Fig. 1 und 2 im weiteren Verlauf der Airbagaktivierung,
- Fig. 4: eine schematische, perspektivische Ansicht eines in einem Airbagmodul-Aufnahmegehäuses aufgenommenen Airbaggehäuses,
- Fig. 5: einen schematischen Querschnitt durch einen Vorderwagenbereich zur Verdeutlichung der Einbausituation der Airbaganordnung,
- Fig. 6: eine schematische, vergrößerte Darstellung einer Rastaufnahme am Führungsschlitzende,
- Fig. 7: eine Darstellung eines Airbagmoduls mit über Sollbruchstellen verbindbaren Airbag-Gehäuseteilen,
- Fig. 8: eine schematische Darstellung entsprechend Fig. 7 im weiteren Verlauf der Belastung, und
- Fig. 9: ein Diagramm des Airbaginnendrucks über dem Weg des Airbags.

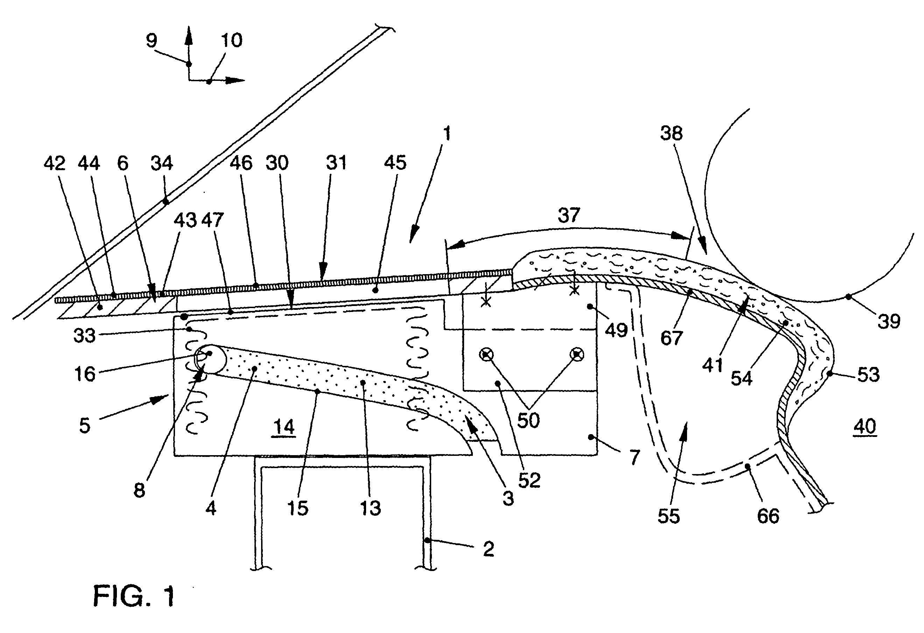

In Fig. 1 ist schematisch ein Querschnitt durch eine Instrumententafel 6 in einem Beifahrerbereich eines Kraftfahrzeugs in Verbindung mit einer erfindungsgemäßen Airbaganordnung 1 oberhalb eines als Querträger ausgebildeten Modulträgers 2 eines Kraftfahrzeugs gezeigt. Die Airbaganordnung 1 weist ein Airbagmodul 3 auf, das wiederum ein Airbaggehäuse 4 umfasst, in dem ein hier nicht dargestellter Gasgenerator und ein hier lediglich strichliert dargestellter Airbag 33 im zusammengefalteten Grundzustand aufgenommen sind.

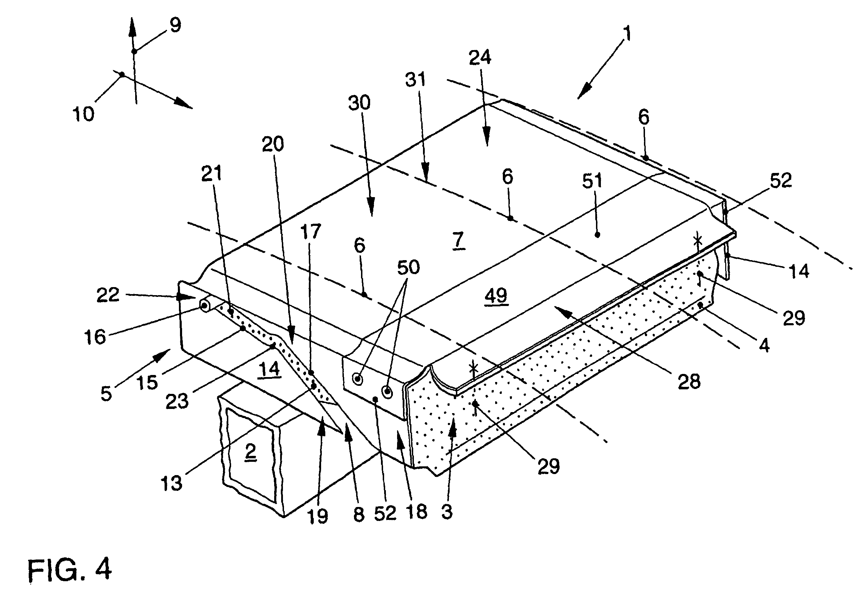

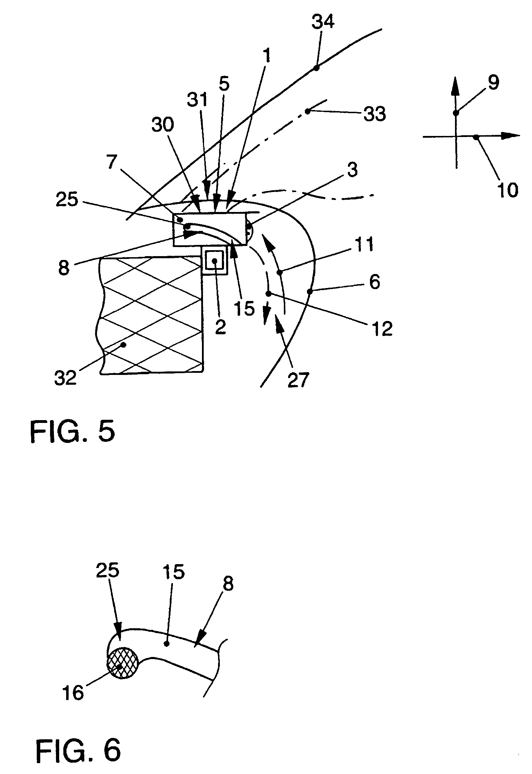

Das Airbagmodul 3 wird hier in einem Spaltbereich 5 zwischen einem Instrumententafelunterseitenbereich der Instrumententafel 6 und einem diesem zugeordneten Modulträgeroberseitenbereich des Modulträgers 2 angeordnet. Dazu ist im Bereich oberhalb des Modulträgers 2 ein Airbagmodulaufnahmegehäuse 7 vorgesehen, in das, wie dies insbesondere auch aus den Fig. 4 und 5 ersichtlich ist, das Airbagmodul 3 mittels einer Führungseinrichtung 8 in Fahrzeughochachsenrichtung 9 gesehen im wesentlichen von unterhalb des Modulträgers 2 sowie in Fahrzeuglängsachsenrichtung 10 gesehen im wesentlichen von hinterhalb des Modulträgers 2 her geführt aus- und/oder einschiebbar ist, wie dies in der Fig. 5 mit den beiden Pfeilen 11 und 12 schematisch gezeigt ist. Dies wird weiter unten nochmals näher erläutert.

In der Fig. 1 und in der Fig. 5 ist das Airbagmodul 3 im fertig eingeschobenen Zustand gezeigt. Insbesondere aus Fig. 4 ist ersichtlich, dass das Airbaggehäuse 4 kastenförmig aufgebaut ist mit gegenüberliegenden Airbaggehäuse-Seitenwänden 13. Das Airbaggehäuse 4 ist im eingeschobenen Zustand des Airbagmoduls 3 von Aufnahmegehäuse-Seitenwänden 14, die den Airbaggehäuse-Seitenwänden 13 zugeordnet sind, umgriffen, wobei in jeder der Aufnahmegehäuse-Seitenwände 14 ein Führungsschlitz 15 ausgebildet ist, dem als weiterer Bestandteil der Führungseinrichtung 8 ein Führungszapfen 16 am Airbaggehäuse 4 zugeordnet ist.

Der Führungsschlitz 15 ist an der Aufnahmegehäuse-Seitenwand 13 mit einem ersten Schlitzbereich 17 in einem bezogen auf die Instrumententafel 6 in Fahrzeuglängsachsenrichtung 10 gesehen hinteren Seitenwandbereich 18, der nach hinten über dem Modulträger 2 übersteht, von einem bezogen auf die Fahrzeughochachsenrichtung 9 unteren Seitenwandbereich 19 ausgehend nach schräg oben bis in einen bezogen auf die Fahrzeughochachsenrichtung 9 oberen Seitenwandbereich 20 geführt. Der Führungsschlitz 15 ist mit einem sich an den ersten Schlitzbereich 17 unmittelbar anschließenden zweiten Schlitzbereich 21 an der Aufnahmegehäuse-Seitenwand 13 in Fahrzeuglängsachsenrichtung 10 gesehen nach vorne bis in etwa zu einem vorderen Seitenwandbereich 22 geführt. Dabei verläuft der zweite Schlitzbereich 21, wie dies in der Fig. 4 lediglich schematisch gezeigt ist, zuerst im wesentlichen waagrecht und ist dann anschließend mit einem im Vergleich zum ersten Schlitzbereich geringerem Anstiegswinkel nach vorne geführt. Dieser waagrechte Schlitzbereich 23 läuft im wesentlichen oberhalb des Modulträgers 2. In der Fig. 5 ist eine alternative Schlitzausführung gezeigt, bei der der Schlitz vorzugsweise in etwa geradlinig von unten hinten nach oben geführt ist. Eine weitere, alternative Schlitzausführung ist in der Fig. 1 gezeigt.

Die Instrumententafel 6 ist in der Darstellung der Fig. 4 aus Übersichtlichkeitsgründen lediglich schematisch und strichliert eingezeichnet. Ferner ist das Airbaggehäuse 4 mit Punkten versehen, zur einfacheren Unterscheidung von dem Airbagmodul-Aufnahmegehäuse 7, in dem das Airbaggehäuse 4 im eingeschobenen Zustand in etwa formschlüssig aufgenommen ist, wobei eine Aufnahmegehäuse-Oberwand 24 das Airbaggehäuse 4 von oben her vorzugsweise in einer Anlageverbindung abdeckt und überdeckt.

Die Führungszapfen 16 sind an den gegenüberliegenden Airbaggehäuse-Seitenwänden 13 jeweils in einem vorderen, einer Windschutzscheibe 34 zugeordneten Airbaggehäuse-Seitenwandbereich angeordnet.

Wie dies in Fig. 6 lediglich schematisch dargestellt ist, kann das vordere Führungsschlitzende 25 als Rastaufnahme 26 ausgebildet sein, in das der Führungszapfen 16 in der eingeschobenen Endposition des Airbagmoduls 3 lösbar einrastbar ist.

Wie dies insbesondere aus Fig. 1 und aus Fig. 4 ersichtlich ist, weist das Airbaggehäuse 4 im montierten Zustand vorzugsweise einen Spaltabstand zu dem Modulträger 2 auf, der z.B. in etwa 8 bis 10 mm beträgt.

Wie dies weiter insbesondere aus Fig. 4 ersichtlich ist, ist das Airbaggehäuse 4 in einem Flanschbereich 28 mit dem Airbagmodul-Aufnahmegehäuse 7 mittels wenigstens einer Schraubverbindung 29 verbindbar. Dieser Flanschbereich 28 ist im montierten Zustand der Airbaganordnung 1, wie dies insbesondere aus der Fig. 5 ersichtlich ist, in einem von unten her gut zugänglichen Montagebereich 27 angeordnet, der bezogen auf die Fahrzeuglängsachsenrichtung 10 in Richtung zum Fahrzeuginnenraum gesehen hinter dem Modulträger 2 liegt.

Der Modulträger 2 verläuft hier als Fahrzeug-Querträger zwischen hier nicht dargestellten, gegenüberliegenden A-Säulen in einem Bereich in etwa auf Höhe eines Heiz- und Klimagerätes 32, das in der Darstellung der Fig. 5 lediglich äußerst schematisch dargestellt ist.

Wie dies in der Fig. 5 lediglich schematisch und beispielhaft für einen Anwendungsfall gezeigt ist, behindert das Heiz- und Klimagerät 32 sowie auch die unmittelbare Anordnung des Airbagmoduls 3 im Bereich oberhalb des Modulträgers 2 im Spaltbereich 5, insbesondere im Kundendienstfall, die einfache Demontage und Montage des Airbagmoduls. Mit der erfindungsgemäßen Airbaganordnung 1 kann über die Führungseinrichtung 8 bei vorherigem Lösen der im Montagebereich 27 gut zugänglichen Schraubverbindungen 29 zwischen dem Airbaggehäuse 4 und dem Airbagmodul-Aufnahmegehäuse 7 das Airbagmodul einfach entsprechend der Pfeile 11, 12 demontiert und auch wieder montiert werden, ohne dass hierzu die Instrumententafel 6 für einen Zugang zum Airbaggehäuse auszubauen wäre.

Die Schlitzgeometrie des in Fig. 4 gezeigten Führungsschlitzes 15 ist hier beispielhaft so gewählt, dass nach dem Einfädeln der Führungszapfen 16 in die zugeordneten Führungsschlitze 15 diese entlang des ersten Schlitzbereichs 17 sehr schnell relativ steil nach schräg oben in Richtung zum vorderen Seitenwandbereich 22 hin geführt werden. Um anschließend z.B. ein auf Block gehen des Airbaggehäuses 4 im Bereich der Airbaganordnung 1 am Modulträger 2 zu vermeiden, wird bei einer Verschiebung entlang des waagrechten Schlitzbereichs 23 sowie entlang des sich daran nach vorne anschließenden weiteren Bereichs des zweiten Schlitzbereichs 21 mit weniger schräg nach oben gerichteter Ausrichtung eine sichere Positionierung des Airbaggehäuses 4 im Airbagmodul-Aufnahmegehäuse 7 erzielt, wobei das Aufnahmegehäuse 7 das Airbaggehäuse 4 für einen kompakten Aufbau im wesentlichen formschlüssig umschließt.

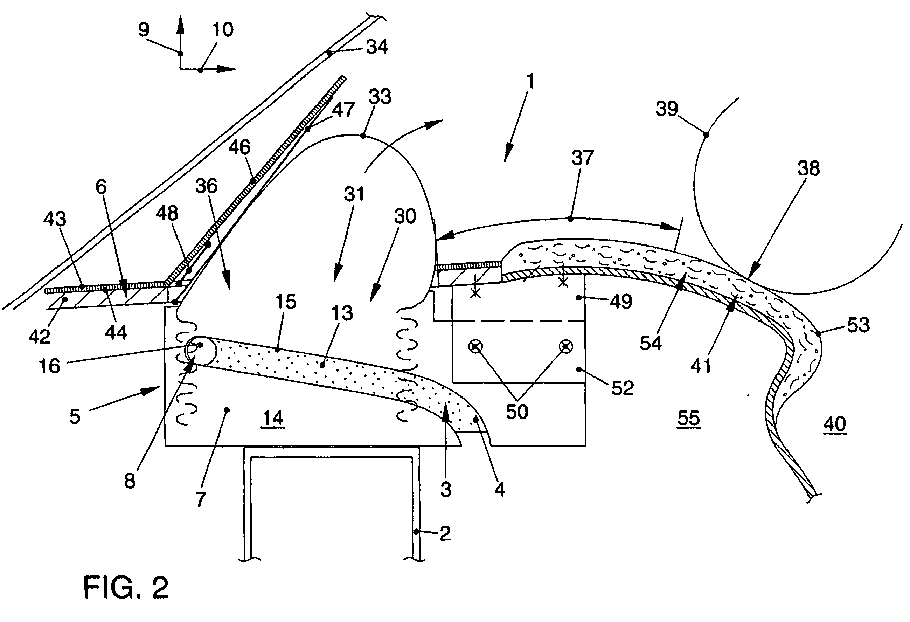

Wie dies insbesondere der Fig. 1 zu entnehmen ist, ist das Airbagmodul 3 und damit insbesondere der Airbag 33 im nicht aktivierten, zusammengefalteten Grundzustand, wie er in der Fig. 1 dargestellt ist, hinter einem der Windschutzscheibe 34 zugeordneten, vorderen Instrumententafelwandbereich als instrumententafelseitigem Airbagaustrittwandbereich 31 angeordnet. Eine in diesem instrumententafelseitigem Airbagaustrittwandbereich 31 ausbildbare und in der Fig. 2, die den aktivierten Zustand eines Aufbaus gemäß Fig. 1 zeigt, dargestellte Airbagaustrittöffnung 36 weist einen vorgebbaren Sicherheitsabstand 37 zu einem potentiellen Kopfaufprallbereich 38 eines Kopfes 39 eines Fahrzeuginsassen in einem sich von der Windschutzscheibe 34 weg in Richtung Fahrzeuginnenraum 40 an den instrumententafelseitigen Airbagaustrittbereich 31 als vorderen Instrumententafelbereich hin anschließenden Kopfaufprall-Instrumententafelbereich 41 auf.

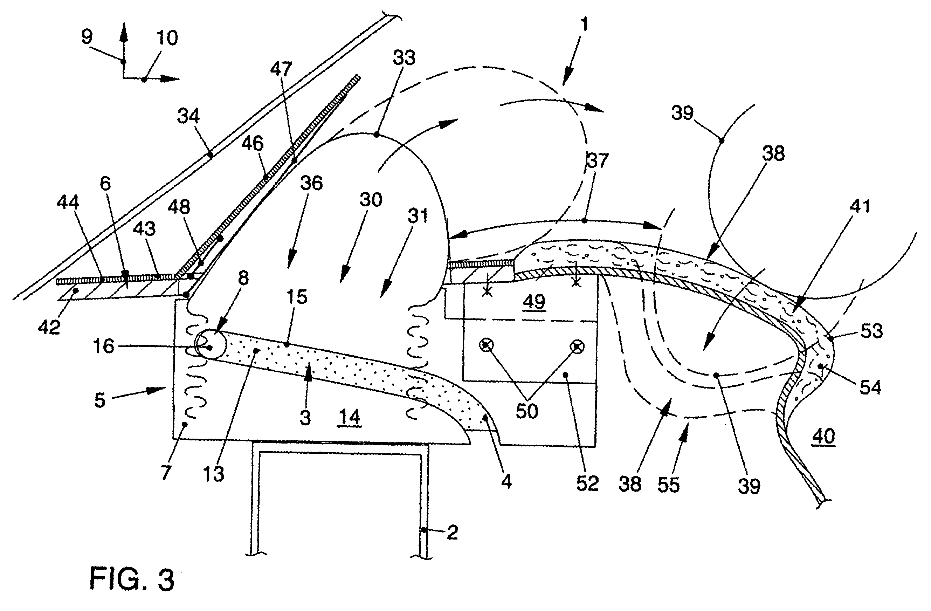

Der Sicherheitsabstand 37 ist hier so vorgegeben, dass der Airbag 33 im in den Fig. 2 und 3 schematisch dargestellten, aktivierten Zustand nach einem Vorschubweg in Richtung Fahrzeuginnenraum 40, der dem Sicherheitsabstand 37 zwischen der Airbagaustrittöffnung 36 und dem potentiellen Kopfaufprallbereich 38 entspricht, einen Gasdruck als Fülldruck aufweist, der gegenüber dem anfänglichen Gasdruck im Airbag 33 zu Beginn der Airbagaktivierung entsprechend vorgegebener Grenzwerte reduziert ist. Wie dies aus den Fig. 1 bis 3 ersichtlich ist, ist der Sicherheitsabstand 37 hier im Querschnitt gesehen beispielhaft in etwa die geradlinige, kürzeste Verbindung zwischen dem Beginn des potentiellen Kopfaufprallbereichs 38 und dem Beginn der Airbagaustrittöffnung 36.

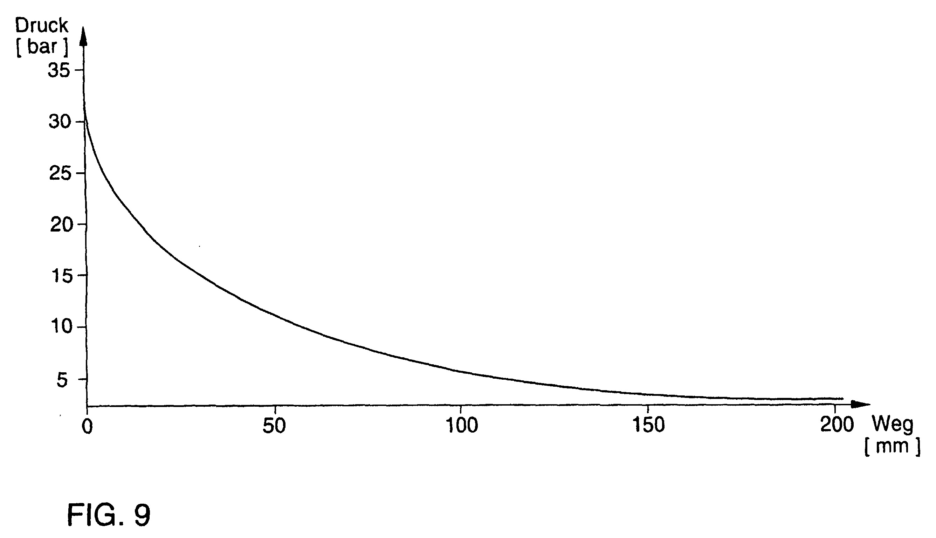

Wie dies dem Diagramm der Fig. 9 zu entnehmen ist, bei der der Airbagdruck über dem Airbagweg aufgezeigt ist, wird der hohe anfängliche Fülldruck von in etwa 30 bar insbesondere auf den ersten Zentimetern, d. h. insbesondere nach einem Vorschubweg von in etwa 100 mm bereits auf einen Druck von in etwa ungefähr 3 bar reduziert. In etwa ab einen Vorschubweg von 120 mm wird in etwa ein Druck von ungefähr 2 bar im Airbag erzielt, der dem am Ende des Aufblasvorgangs im Airbag vorhandenen Mindestdruck entspricht. D. h., dass bereits bei einem Sicherheitsabstand von in etwa 120 mm die durch den Befüllvorgang und dem damit einhergehenden hohen Fülldruck vorhandene Airbagaggressivität erheblich reduziert ist. Dadurch lässt sich je nach den gegebenen Einbauverhältnissen beispielsweise bereits ab einem Sicherheitsabstand von in etwa 100 mm zwischen der Airbagaustrittöffnung 36 und dem Kopfaufprallbereich 38 eine erhebliche Reduzierung der Beeinträchtigungsgefahr für sich out-of-position befindliche Fahrzeuginsassen, wie z. B. Kinder, erzielen, da die Aggressivität des Airbags 33 nach Durchlaufen des Sicherheitsabstandes 37, die durch den hohen anfänglichen Fülldruck bedingt ist, nahezu auf den Minimalwert reduziert ist.

Wie dies den Fig. 1 bis 3 und auch der Fig. 5 entnommen werden kann, ist ein Airbagaustrittbereich 30 des Airbagmodul-Aufnahmegehäuses 7 im montierten Zustand dem instrumententafelseitigen Airbagaustrittwandbereich 31 zugeordnet.

Wie dies den Fig. 1 bis 3 weiter entnommen werden kann, kann wenigstens der der Windschutzscheibe 34 zugewandte, vordere Instrumententafelbereich als instrumententafelseitiger Airbagaustrittbereich 31 aus einem tragenden Grundkörper 42 ausgebildet sein, in dem wenigstens eine hier nicht dargestellte Ausströmdüse integriert ist. Der Grundkörper 42 ist von oben her mittels einer Abdeckung 43 abgedeckt, die durchgehend perforiert ist, mit einem Perforationsmuster dergestalt, dass über die Perforierungen 44 als Luftdurchtrittsöffnungen wenigstens im Bereich der wenigstens einen Ausströmdüse eine diffuse Belüftung einstellbar ist. Im Bereich des instrumententafelseitigen Airbagaustrittwandbereichs 31 ist im Grundkörper 42 eine Aussparung 45 vorgesehen. Zudem ist die perforierte Abdeckung 43 in diesem Bereich zur Ausbildung einer in den Fig. 2 und 3 dargestellten aufschwenkbaren Abdeckklappe 46 zur Freigabe der Airbagaustrittöffnung 36 mit entsprechenden Sollbruchstellen versehen, wobei die Abdeckung 43 die Aussparung 45 im nicht aktivierten Zustand, wie dies in der Fig. 1 dargestellt ist, für eine durchgehende, gleichmäßige Optik von oben her abdeckt.

Im Falle der Airbagaktivierung drückt dann der Airbag 33 mit seinem hohen anfänglichen Fülldruck, von z. B. 30 bar, auf eine im aufnahmegehäuseseitigen Airbagaustrittbereich 30 ausbildbare Abdeckklappe 47, die wiederum auf die im instrumententafelseitigen Airbagaustrittbereich 31 ausbildbare Abdeckklappe 46 drückt, so dass diese Abdeckklappen 46, 47 in der in den Fig. 2 und 3 gezeigten, schematischen Art und Weise fischmaulartig aufklappen und die Airbagaustrittöffnung 36 zum Aufblasen des Airbags 33 im Fahrzeuginnenraum 40 freigeben.

Um zu verhindern, dass die Abdeckklappe 46 während des Aufschwenkens auf die Windschutzscheibe 34 auftrifft, sind im Bereich der Airbagaustrittöffnung 36 Rückhaltemittel vorgesehen, z.B. ein Fangband 48, die den Aufschwenkwinkel der Abdeckklappen 46, 47 begrenzen. Zudem kann mit einem bestimmten Anstellwinkel der Abdeckklappen 46, 47, wie dies in der Fig. 3 insbesondere schematisch eingezeichnet ist, eine bestimmte Aufblasrichtung des Airbags 33 in Richtung Fahrzeuginnenraum 40 vorgegeben werden.

Die Abdeckklappe 46 ist Bestandteil des Airbagmodul-Aufnahmegehäuses 7, das auch als Schusskanal bezeichnet werden kann. Wie dies aus den Fig. 1 bis 4 weiter ersichtlich ist, ist das Airbagmodul-Aufnahmegehäuse 7 zweiteilig ausgebildet, aus einem Widerlagerbereich 49 als separatem Bauteil, das gleich zu Beginn der Montage durch z.B. Vernieten mit der Instrumententafelunterseite verbunden wird. Im weiteren Verlauf der Montage wird dann der Rest des Airbagmodul-Aufnahmegehäuses, in dem die Abdeckklappe 47 ausbildbar ist, mit dem Widerlagerbereich 49 verbunden, z.B. mittels herkömmlicher Schraubverbindungen 50. Wie dies insbesondere aus der Fig. 4 ersichtlich ist, ist der Widerlagerbereich 49 U-förmig ausgebildet, mit einem U-Basisbereich 51, der mit der Instrumententafelunterseite verbunden wird. Der Widerlagerbereich 49 umgreift mit U-Schenkeln 52 einen Teilbereich des Restes des Airbagmodul-Aufnahmegehäuses 7, hier vorzugsweise im Bereich oberhalb eines dort aufgenommenen Gasgenerators, und wird dort mittels der Schraubverbindungen 50 festgelegt.

Alternativ oder zusätzlich dazu kann das Airbagmodul-Aufnahmegehäuse jedoch auch am Modulträger 2 festgelegt werden, wie dies lediglich äußerst schematisch und beispielhaft in der Darstellung der Fig. 5 gezeigt ist.

Wie dies weiter aus den Fig. 1 bis 3 entnommen werden kann, kann der potentielle Kopfaufprallbereich 38 der Instrumententafel 6 zum Teil aus einem unter Energieabsorption deformierbaren Material hergestellt sein, so z.B. aus einer mit einer Slushhaut 53 überzogenen Energieabsorptionsschaum-Trägerschicht 54. Im unterhalb des potentiellen Kopfaufprallbereichs 38 der Instrumententafel 6 liegenden Bereich ist ein Deformationsraum 55 ausgebildet, in den hinein sich der potentielle Kopfaufprallbereich 38 der Instrumententafel 6, wie dies in der Fig. 3 lediglich schematisch und strichliert eingezeichnet ist, unter Energieabsorption ungehindert verformen kann.

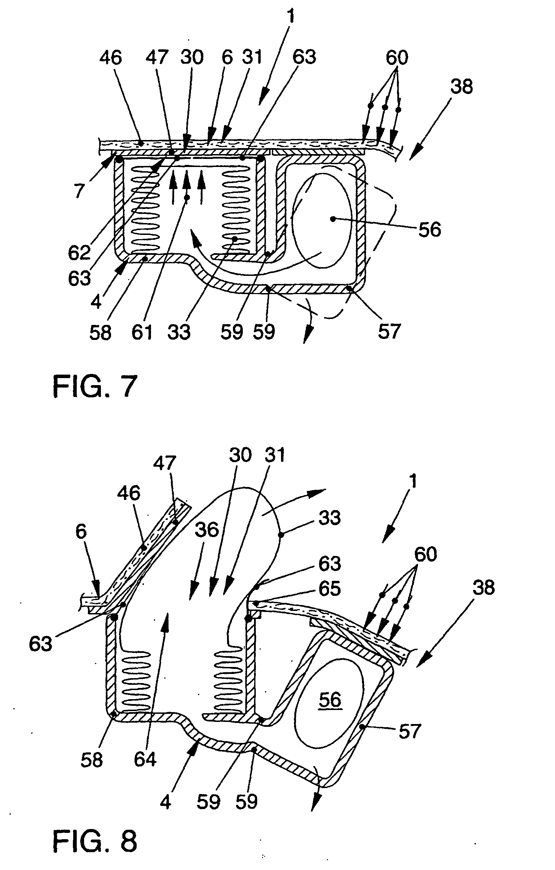

Insbesondere für den Fall, dass beengte Einbauverhältnisse vorhanden sind, und wenigstens ein Teilbereich des Airbaggehäuses 4, z. B. ein einen Gasgenerator 56 aufnehmender Gasgenerator-Gehäusebereich 57, wie dies in den Fig. 7 und 8 dargestellt ist, randseitig in den potentiellen Kopfaufprallbereich 38 ragt, kann vorgesehen sein, dass dieser Gasgenerator-Gehäusebereich 57 mit einem den Airbag 33 aufnehmenden Airbag-Gehäusebereich 58 z.B. über Sollbruchstellen 59 verbunden ist. Dadurch wird erreicht, dass bei einer Krafteinwirkung, die in den Fig. 7 und 8 durch die Pfeile 60 dargestellt ist, auf den deformierbar gestalteten, potentiellen Kopfaufprallbereich 38 der Instrumententafel 6 und einem Aufprallkontakt des deformierenden Teilbereichs mit dem Gasgenerator-Gehäusebereich 57 der Gasgenerator-Gehäusebereich 57 entlang der Sollbruchstellen einknickt bzw. bricht, wie dies in der Darstellung der Fig. 7 strichliert und in der Darstellung der Fig. 8 mit ausgezogenen Linien dargestellt ist. Dadurch wird die Gefahr eines auf Block gehen des Deformationsbereiches erheblich reduziert.

Weiter ist in den Fig. 7 bis 8 besonders gut ersichtlich, dass für eine kompakte Flachbauweise des Airbagmoduls 3 der Gasgenerator 56 seitlich neben dem Airbag 33 angeordnet ist, wobei für einen vorteilhaften Öffnungsdruck der Gasstrahl 61 direkt auf den Airbagaustrittbereich gerichtet ist und der Gasstrahl vom Gasgenerator kommend von unten her mittig in den zusammengefalteten Airbag 33 einbläst. Bei dieser in der Fig. 7 und 8 dargestellten Ausführungsform ist ein Airbaggehäuse-Austrittbereich 62 mittels einer Schutzabdeckung 63 verschlossen, die den Airbag 33 im zusammengefalteten Zustand im Airbaggehäuse 4 hält und die bei aktiviertem Airbag in einem mittleren Bereich unter Bildung wenigstens zweier Klappenteile eine Gehäuse-Austrittöffnung 64 freigibt, wie dies aus der Fig. 8 ersichtlich ist, wobei die aufgeklappten Klappenteile wenigstens bereichsweise einen Kantenschutz ausbilden, dergestalt, dass sie angrenzende Kantenbereiche 65 abdecken.

Im Ausführungsbeispiel der Fig. 7 und 8 sind die Abdeckklappen 46 und 47, die im instrumententafelseitigen und im aufnahmegehäuseseitigen Airbagaustrittbereich 30, 31 ausbildbar sind, gemäß einer weiteren, bevorzugten Ausgestaltung vorzugsweise als Materialverbund hergestellt, so dass sie lediglich eine einzige, aufschwenkbare Klappe ausbilden. Dies kann unter Umständen Vorteile bezüglich der Aufschwenkkinematik haben.

Wie dies weiter aus der Fig. 1 ersichtlich ist, kann im unterhalb des potentiellen Kopfaufprallbereichs 38 der Instrumententafel 6 und damit in Fahrzeuglängsachsenrichtung 10 in Richtung Fahrzeuginnenraum 40 gesehen, ausgebildeten Deformationsraum 55 als Montagefreiraum auch ein Luftkanal 66 als Hauptluftkanal angeordnet werden. Dieser Luftkanal 66 kann, wie dies in der Fig. 1 lediglich strichliert eingezeichnet ist integral mit einer Instrumententafelunterseite ausgebildet sein, dergestalt, dass ein Unterseitenwandbereich 67 der Instrumententafel 6 Bestandteil der Luftkanalwand bildet.

Ein derartiger Luftkanal ist regelmäßig aus einem wenig steifen Kunststoffmaterial hergestellt und beeinträchtigt somit die Deformationseigenschaften des potentiellen Kopfaufprallbereichs 38 der Instrumententafel nicht wesentlich.

### BEZUGSZEICHENLISTE

- 1: Airbaganordnung
- 2: Modulträger
- 3: Airbagmodul
- 4: Airbaggehäuse
- 5: Spaltbereich
- 6: Instrumententafel
- 7: Aufnahmegehäuse
- 8: Führungseinrichtung
- 9: Fahrzeughochachsenrichtung
- 10: Fahrzeuglängsachsenrichtung
- 11: Pfeil
- 12: Pfeil
- 13: Airbaggehäuse-Seitenwände
- 14: Aufnahmegehäuse-Seitenwände
- 15: Führungsschlitz
- 16: Führungszapfen
- 17: erster Schlitzbereich
- 18: hinterer Seitenwandbereich
- 19: unterer Seitenwandbereich
- 20: oberer Seitenwandbereich
- 21: zweiter Schlitzbereich
- 22: vorderer Seitenwandbereich
- 23: waagrechter Schlitzbereich
- 24: Aufnahmegehäuse-Oberwand
- 25: vorderes Führungsschlitzende
- 26: Rastaufnahme
- 27: Montagebereich
- 28: Flanschbereich
- 29: Schraubverbindung
- 30: Airbagaustrittbereich
- 31: Airbagaustrittbereich
- 32: Heiz- und Klimageräte
- 33: Airbag
- 34: Windschutzscheibe
- 36: Airbagaustrittöffnung
- 37: Sicherheitsabstand
- 38: potentieller Kopfaufprallbereich
- 39: Kopf
- 40: Fahrzeuginnenraum
- 41: Kopfaufprall-Instrumententafelbereich
- 42: Grundkörper
- 43: Abdeckung
- 44: Perforierungen
- 45: Aussparung
- 46: Abdeckklappe
- 47: Abdeckklappe
- 48: Fangband
- 49: Widerlagerbereich
- 50: Schraubverbindungen
- 51: U-Basisbereich
- 52: U-Schenkeln
- 53: Slushhaut
- 54: Trägerschicht
- 55: Deformationsraum
- 56: Gasgenerator
- 57: Gasgenerator-Gehäusebereich
- 58: Airbag-Gehäusebereich
- 59: Sollbruchstellen
- 60: Pfeile
- 61: Gasstrahl
- 62: Airbaggehäuse-Austrittbereich
- 63: Schutzabdeckung
- 64: Gehäuse-Austrittöffnung
- 65: Kantenbereich
- 66: Luftkanal
- 67: Unterseitenwandbereich

## Patentansprüche

1. Airbaganordnung in einem Fahrzeug, insbesondere einem Kraftfahrzeug,
mit wenigstens einem Airbag (33), der im nicht aktivierten, zusammengefalteten Grundzustand hinter einem instrumententafelseitigen Airbagaustrittwandbereich (31) einer Instrumententafel (6) angeordnet ist und der im aktivierten Zustand durch eine im instrumententafelseitigen Airbagaustrittwandbereich (31) ausbildbare Airbagaustrittöffnung (36) hindurch vor der Instrumententafel (6) im Fahrzeuginnenraum (40) aufblasbar ist, wobei der wenigstens eine Airbag (33) im nicht aktivierten, zusammengefalteten Grundzustand hinter einem einer Windschutzscheibe (34) zugeordneten, vorderen Instrumententafelwandbereich als instrumententafelseitigem Airbagaustrittwandbereich (31) angeordnet ist,
wobei die im vorderen Instrumententafelwandbereich (31) ausbildbare Airbagaustrittöffnung (36) einen vorgegebenen Sicherheitsabstand (37) zu einem potentiellen Kopfaufprallbereich (38) eines Fahrzeuginsassen in einem sich von der Windschutzscheibe (34) weg in Richtung Fahrzeuginnenraum (40) an den vorderen Instrumententafelwandbereich (31) hin anschließenden Kopfaufprall-Instrumententafelwandbereich (41) aufweist,
**dadurch gekennzeichnet,**
**dass** der Sicherheitsabstand (37) so vorgegeben ist, dass der Airbag (33) nach einem dem Sicherheitsabstand (37) zwischen der Airbagaustrittöffnung (36) und dem potentiellen Kopfaufprallbereich (38) entsprechenden Vorschubweg in Richtung Fahrzeuginnenraum (40) einen Fülldruck aufweist, der gegenüber dem anfänglichen Fülldruck im Airbag (33) zu Beginn der Airbagaktivierung entsprechend vorgegebener Grenzwerte reduziert ist.

2. Airbaganordnung nach Anspruch 1, **dadurch gekennzeichnet, dass** der Sicherheitsabstand (37) so festgelegt ist, dass der Fülldruck im Airbag (33) nach einem Vorschubweg des Airbags (33) entsprechend dem Sicherheitsabstand (37) im potentiellen Kopfaufprallbereich (38) höchstens in etwa 15 %, bevorzugt höchstens in etwa 10 %, höchst bevorzugt höchstens in etwa 5 %, des anfänglichen Gasdrucks beträgt.

3. Airbaganordnung nach Anspruch 1 oder Anspruch 2, **dadurch gekennzeichnet, dass** der Sicherheitsabstand (37) in Abhängigkeit von der jeweiligen Aufprallsituation wenigstens in etwa 10 cm, bevorzugt wenigstens in etwa 15 cm, höchst bevorzugt wenigstens in etwa 20 cm beträgt.

4. Airbaganordnung nach einem der Ansprüche 1 bis 3, **dadurch gekennzeichnet, dass** der Airbag (33) einen anfänglichen Fülldruck zwischen in etwa 30 bar und 35 bar aufweist und der Fülldruck nach einem Vorschubweg von in etwa 100 mm in etwa 2,5 bis 3,5 bar und vorzugsweise nach einem Vorschubweg von in etwa 200 mm in etwa 1,5 bis 2,5 bar beträgt.

5. Airbaganordnung nach einem der Ansprüche 1 bis 4, **dadurch gekennzeichnet, dass** der Sicherheitsabstand (37) im Querschnitt durch die Instrumententafel (6) gesehen in etwa die geradlinige kürzeste Verbindung zwischen dem der Airbagaustrittöffnung (36) zugewandten Beginn des potentiellen Kopfaufprallbereichs (38) und dem dem potentiellen Kopfaufprallbereich (38) zugewandten Beginn der Airbagaustrittöffnung (36) ist.

6. Airbaganordnung nach einem der Ansprüche 1 bis 5, **dadurch gekennzeichnet,**
**dass** der potentielle Kopfaufprallbereich (38) aus einem unter Energieabsorption deformierbaren Material hergestellt ist, und
**dass** im unterhalb des potentiellen Kopfaufprallbereichs (38) der Instrumententafel (6) liegenden Bereich ein Deformationsraum (55) ausgebildet ist dergestalt, dass bei einem Kopfaufprall auf den potentiellen Kopfaufprallbereich (38) dieser Bereich der Instrumententafel (6) unter Energieabsorption ungehindert in den Deformationsraum (55) hinein verformbar ist.

7. Airbaganordnung nach einem der Ansprüche 1 bis 6, **dadurch gekennzeichnet, dass** unterhalb des potentiellen Kopfaufprallbereichs (38) der Instrumententafel (6) und damit in Fahrzeuglängsachsenrichtung (10) in Richtung Fahrzeuginnenraum (40) gesehen ein Montagefreiraum (55) ausgebildet ist, in dem ein Luftkanal (66) anordenbar ist.

8. Airbaganordnung nach einem der Ansprüche 1 bis 7, **dadurch gekennzeichnet,**
**dass** ein Airbaggehäuse (4) so ausgebildet ist, dass der darin aufgenommene, wenigstens eine Airbag (33) im montierten Grundzustand seitlich neben wenigstens einem Gasgenerator (56) angeordnet ist, und/oder
**dass** im Verbindungsbereich zwischen einem den Gasgenerator (56) aufnehmenden Gasgenerator-Gehäusebereich (57) und einem den Airbag (33) aufnehmenden AirbagGehäusebereich (58) wenigstens eine Materialschwächung und/oder Sollbruchstelle (59) vorgesehen ist, die bei einer Krafteinwirkung auf einen der beiden Gehäuseteile (57), insbesondere bei einer Krafteinwirkung auf den wenigstens bereichsweise in einen deformierbar gestalteten, potentiellen Kopfaufprallbereich (38) der Instrumententafel (6) ragenden Gasgenerator-Gehäusebereich (57), bricht und ein auf Block gehen des Deformationsbereiches verhindert.

9. Airbaganordnung nach einem der Ansprüche 1 bis 8, **dadurch gekennzeichnet, dass** die einen Airbagaustrittbereich (30) eines Airbagmodul-Aufnahmegehäuses (7) und die den Airbagaustrittwandbereich (31) in der Instrumententafel (6) bildenden Bereiche des Aufnahmegehäuses (7) und der Instrumententafel (6) in einer Anlageverbindung aneinanderliegen, vorzugsweise als Materialverbund ausgebildet sind, und eine in Richtung zur Windschutzscheibe (34) hin aufschwenkbare Abdeckklappe (46, 47) zur Freigabe der Airbagaustrittöffnung ausbilden.

10. Airbaganordnung nach Anspruch 9, **dadurch gekennzeichnet, dass** die Abdeckklappe (46) im aufgeklappten Zustand wenigstens zu Beginn des Aufblasvorgangs einen direkten Aufprall des Airbags (33) auf die Windschutzscheibe (34) abschirmt und den Airbag (33) in Richtung Fahrzeuginnenraum (40) leitet.

## Claims

1. Airbag arrangement in a vehicle, in particular a motor vehicle,
having at least one airbag (33) which, in the unactivated, collapsed basic state, is arranged behind an instrument-panel-side airbag outlet wall region (31) of an instrument panel (6) and which, in the activated state, can be inflated in the vehicle interior (40) in front of the instrument panel (6) through an airbag outlet opening (36) which can be formed in the instrument-panel-side airbag outlet wall region (31), the at least one airbag (33), in the unactivated, collapsed basic state, being arranged behind a front instrument panel wall region, assigned to a windscreen (34), as the instrument-panel-side airbag outlet wall region (31),
the airbag outlet opening (36), which can be formed in the front instrument panel wall region (31), being at a predetermined safety distance (37) from a potential head impact region (38) of a vehicle occupant in a head-impact instrument panel wall region (41) adjoining the front instrument panel wall region (31) away from the windscreen (34) in the direction of the vehicle interior (40),
**characterized**
**in that** the safety distance (37) is predetermined in such a manner that the airbag (33), after advancing in the direction of the vehicle interior (40) by a distance corresponding to the safety distance (37) between the airbag outlet opening (36) and the potential head impact region (38), has a filling pressure which is reduced in accordance with predetermined limit values in comparison with the initial filling pressure in the airbag (33) at the beginning of the airbag activation.

2. Airbag arrangement according to Claim 1, **characterized in that** the safety distance (37) is defined in such a manner that, after the airbag (33) has advanced by a distance corresponding to the safety distance (37), the filling pressure in the airbag (33) in the potential head impact region (38) is at most approximately 15%, preferably at most approximately 10%, most preferably at most approximately 5%, of the initial gas pressure.

3. Airbag arrangement according to Claim 1 or Claim 2, **characterized in that** the safety distance (37) is at least approximately 10 cm, preferably at least approximately 15 cm, most preferably at least approximately 20 cm, depending on the particular impact situation.

4. Airbag arrangement according to one of Claims 1 to 3, **characterized in that** the airbag (33) has an initial filling pressure between approximately 30 bar and 35 bar and, after advancing by a distance of approximately 100 mm, the filling pressure is approximately 2.5 to 3.5 bar and, after advancing by a distance of approximately 200 mm, is preferably approximately 1.5 to 2.5 bar.

5. Airbag arrangement according to one of Claims 1 to 4, **characterized in that** the safety distance (37), as seen in cross section through the instrument panel (6), is approximately the rectilinear, shortest connection between the start of the potential head impact region (38) facing the airbag outlet opening (36) and the start of the airbag outlet opening (36) facing the potential head impact region (38).

6. Airbag arrangement according to one of Claims 1 to 5, **characterized**
**in that** the potential head impact region (38) is produced from a material which can be deformed with energy being absorbed, and
**in that** a deformation space (55) is formed in the region situated below the potential head impact region (38) of the instrument panel (6) in such a manner that, when a head impacts against the potential head impact region (38), this region of the instrument panel (6) can be deformed without obstruction, with energy being absorbed, into the deformation space (55).

7. Airbag arrangement according to one of Claims 1 to 6, **characterized in that** an installation clearance (55) in which an air duct (66) can be arranged is formed below the potential head impact region (38) of the instrument panel (6) and therefore in the direction of the vehicle interior (40), as seen in the direction of the vehicle longitudinal axis (10).

8. Airbag arrangement according to one of Claims 1 to 7, **characterized**
**in that** an airbag housing (4) is designed in such a manner that the at least one airbag (33) which is accommodated therein, in the fitted basic state, is arranged laterally next to at least one gas generator (56), and/or
**in that**, in the connecting region between a gas-generator housing region (57) accommodating the gas generator (56) and an airbag housing region (58) accommodating the airbag (33), at least one material weakening and/or predetermined breaking point (59) is provided and, when force is applied to one of the two housing parts (57), in particular when force is applied to the gas-generator housing region (57), which protrudes at least in some regions into a deformably designed, potential head impact region (38) of the instrument panel (6), breaks and prevents the deformation region from forming a solid barrier.

9. Airbag arrangement according to one of Claims 1 to 8, **characterized in that** those regions of the accommodating housing (7) and of the instrument panel (6) which form the one airbag outlet region (30) of an airbag-module accommodating housing (7) and those which form the airbag outlet wall region (31) in the instrument panel (6) are situated next to one another in an abutting connection, and are preferably designed as a material bond, and form a covering flap (46, 47) which can be pivoted up in the direction of the windscreen (34) to open up the airbag outlet opening.

10. Airbag arrangement according to Claim 9, **characterized in that** the covering flap (46), in the state in which it is swung open, shields a direct impact of the airbag (33) against the windscreen (34), at least at the beginning of the inflation process, and guides the airbag (33) in the direction of the vehicle interior (40).

## Revendications

1. Système d'airbag dans un véhicule, notamment un véhicule automobile,
avec au moins un airbag (33) qui, dans l'état de base replié, non activé, est disposé derrière une région (31) de paroi de sortie d'airbag côté tableau de bord d'un tableau de bord (6) et qui, dans l'état activé, peut être, en traversant une ouverture (36) de sortie d'airbag pouvant être formée dans la région (31) de paroi de sortie d'airbag côté tableau de bord, gonflé devant le tableau de bord (6) dans l'habitacle (40) du véhicule, sachant que l'airbag (33) au moins unique est disposé, dans l'état de base replié, non activé, derrière une région avant de paroi de tableau de bord associée à un pare-brise (34) en tant que région (31) de paroi de sortie d'airbag côté tableau de bord,
sachant que l'ouverture (36) de sortie d'airbag pouvant être formée dans la région (31) avant de paroi de tableau de bord présente une distance de sécurité prédéfinie (37) par rapport à une région (38) potentielle d'impact pour la tête d'un occupant du véhicule, région (38) qui est située dans une région (41) d'impact pour la tête de la paroi du tableau de bord qui se raccorde à la région (31) avant de paroi de tableau de bord en éloignement du pare-brise (34) et en direction de l'habitacle (40) du véhicule,
**caractérisé en ce que** la distance de sécurité (37) est prédéfinie de telle sorte que l'airbag (33), après avoir avancé en direction de l'habitacle (40) du véhicule d'une distance correspondant à la distance de sécurité (37) entre l'ouverture (36) de sortie d'airbag et la région (38) potentielle d'impact pour la tête, présente une pression de remplissage qui est réduite selon des valeurs limites prédéfinies par rapport à la pression de remplissage initiale dans l'airbag (33) au début de l'activation de l'airbag.

2. Système d'airbag selon la revendication 1, **caractérisé en ce que** la distance de sécurité (37) est définie de telle sorte que, après une distance d'avancement de l'airbag (33) correspondant à la distance de sécurité (37), la pression de remplissage dans l'airbag (33) dans la région (38) potentielle d'impact pour la tête est égale à au plus environ 15 %, de préférence à au plus environ 10 %, et d'une manière particulièrement préférée à au plus environ 5 %, de la pression de gaz initiale.

3. Système d'airbag selon la revendication 1 ou 2, **caractérisé en ce que** la distance de sécurité (37) est égale, en fonction de la situation d'impact respective, à au moins environ 10 cm, de préférence à au moins environ 15 cm, et d'une manière particulièrement préférée à au moins environ 20 cm.

4. Système d'airbag selon l'une quelconque des revendications 1 à 3, **caractérisé en ce que** l'airbag (33) présente une pression de remplissage initiale comprise entre environ 30 bars et 35 bars, et la pression de remplissage est égale à environ 2,5 à 3,5 bars après une distance d'avancement d'environ 100 mm, et de préférence à environ 1,5 à 2,5 bars après une distance d'avancement d'environ 200 mm.

5. Système d'airbag selon l'une quelconque des revendications 1 à 4, **caractérisé en ce que** la distance de sécurité (37) est, considérée en coupe transversale à travers le tableau de bord (6), approximativement la liaison en ligne droite la plus courte entre le début - tourné vers l'ouverture (36) de sortie d'airbag - de la région (38) potentielle d'impact pour la tête et le début - tourné vers la région (38) potentielle d'impact pour la tête - de l'ouverture (36) de sortie d'airbag.

6. Système d'airbag selon l'une quelconque des revendications 1 à 5, **caractérisé**
**en ce que** la région (38) potentielle d'impact pour la tête est fabriquée en un matériau pouvant se déformer avec absorption d'énergie, et
**en ce que**, dans la région située en dessous de la région (38) potentielle d'impact pour la tête du tableau de bord (6), une chambre de déformation (55) est configurée de telle sorte que, lors d'un impact de la tête sur la région (38) potentielle d'impact pour la tête, cette région du tableau de bord (6) peut se déformer, avec absorption d'énergie, sans entrave à l'intérieur de la chambre de déformation (55).

7. Système d'airbag selon l'une quelconque des revendications 1 à 6, **caractérisé en ce qu'**un espace libre de montage (55), dans lequel peut être disposé un conduit d'air (66), est configuré en dessous de la région (38) potentielle d'impact pour la tête du tableau de bord (6) et donc, considéré dans la direction (10) de l'axe longitudinal du véhicule, en direction de l'habitacle (40) du véhicule.

8. Système d'airbag selon l'une quelconque des revendications 1 à 7, **caractérisé**
**en ce qu'**un boîtier d'airbag (4) est configuré de telle sorte que l'airbag (33) au moins unique qui y est reçu est disposé, dans l'état de base monté, à côté d'au moins un générateur de gaz (56), et/ou
**en ce que**, dans la région de liaison entre une région (57) de boîtier pour générateur de gaz recevant le générateur de gaz (56) et une région (58) de boîtier pour airbag recevant l'airbag (33), il est prévu au moins un affaiblissement de matériau et/ou un point de (59) de rupture privilégiée qui, lors de l'action d'une force sur une des deux parties de boîtier (57), notamment lors de l'action d'une force sur la région (57) de boîtier pour générateur de gaz - région qui dépasse au moins partiellement dans une région (38) potentielle d'impact pour la tête, conçue déformable, du tableau de bord (6) -, se rompt et empêche la région de déformation de devenir une barrière solide.

9. Système d'airbag selon l'une quelconque des revendications 1 à 8, **caractérisé en ce que** la région d'un boîtier (7) récepteur de module d'airbag qui forme une région (30) de sortie d'airbag du boîtier récepteur (7) et la région du tableau de bord (6) qui forme la région (31) de paroi de sortie d'air bag dans le tableau de bord (6) s'appliquent l'une contre l'autre en liaison par application, de préférence sont conçues matériellement jointives, et forment un volet de recouvrement (46, 47) qui, afin de dégager l'ouverture de sortie d'airbag, peut être ouvert par pivotement en direction du pare-brise (34).

10. Système d'airbag selon la revendication 9, **caractérisé en ce que** le volet de recouvrement (46) dans l'état ouvert par rabattement, au moins au début du processus de gonflage, protège le pare-brise (34) d'un impact direct de l'airbag (33) et dirige l'airbag (33) en direction de l'habitacle (40) du véhicule.
